# DEMANDE DE BREVET EUROPEEN

(11) **EP 4 664 423 A1**
(43) Date de publication de la demande: **17.12.2025**
(21) Numéro de dépôt: 25178640.6
(22) Date de dépôt: 23.05.2025
(51) Int. Cl.: G06V 20/52, G06V 40/18, H04N 23/611, G06V 40/16

(54) **TRAITEMENT DE DONNÉES D'IMAGE DE TRIBUNES POUR IDENTIFIER UNE ZONE D'ATTENTION**

(30) Priorité: 11.06.2024 FR 2406192
(71) Demandeur: Orange, 92130 Issy-les-Moulineaux (FR)
(72) Inventeur: COUTANT, Stéphane, 92326 CHATILLON CEDEX (FR); CUMIN, Julien, 92326 CHÂTILLON CEDEX (FR)
(74) Mandataire: Plasseraud IP

(57) **Abrégé**

Il est proposé un traitement de données d'image d'un espace regroupant des spectateurs, par exemple dans une tribune d'un stade. Le traitement comporte :
- estimer (P4), dans un voisinage courant de spectateurs dans l'image, des orientations de têtes respectives de spectateurs dudit voisinage,
- détecter (P5), au moins en fonction desdites orientations de têtes estimées, si lesdites têtes sont orientées vers une zone de l'espace, pour générer (P6), le cas échéant, un signal comportant des données de ladite zone en tant que zone d'attention de spectateurs dans ledit espace.

## Description

### Domaine technique

La présente divulgation relève du traitement de données d'image, notamment de tribunes de spectateurs assistant à un évènement, par exemple un évènement sportif.

Elle trouve une application possible mais non limitative à la surveillance de tribunes, notamment pour des raisons de sécurité.

### Technique antérieure

Typiquement, les très grands rassemblements de personnes présentent un défi de sécurité de plus en plus aigu. Le monde du sport connait régulièrement précisément cette inquiétude. La France relève ce défi en accueillant les Jeux Olympiques d'été de 2024.

Les stades présentent de nombreux avantages pour gérer la sécurité des spectateurs, car la disposition des spectateurs en position assise présente bien moins de risques qu'une foule mobile présentant notamment le risque d'une bousculade collective. Notamment, il est important de détecter au plus tôt tout incident, y compris dans les tribunes d'un stade de spectateurs assis, car si l'incident n'est pas détecté et traité très vite, il peut s'amplifier en phénomène de foule incontrôlé.

Il existe des traitements pour la gestion de la sécurité de foule. Notamment par l'analyse vidéo, portant par exemple sur la captation de densité humaine, de vitesse (d'un cortège) et de mouvements locaux de groupes de personnes. Ainsi, pour la surveillance de foule, notamment en mouvement, un principal indicateur d'incident est précisément le déplacement anormal de groupes de personnes.

A l'inverse, dans un stade ou une salle de spectacle, munis de places assises, la détection de débuts d'incidents sur la base de « déplacements » n'est pas applicable.

La sécurité des spectateurs assis (et immobiles ou peu mobiles) est une tâche complexe dans un grand stade. Il n'est pas connu de technique autre que manuelle : un opérateur utilise une caméra motorisée pour scruter la foule et, en cas de doute, il peut pointer l'axe de la caméra dans une direction qu'il choisit et zoomer dans une zone d'intérêt.

Le temps de réaction à un incident est crucial. Aussi, le délai de détection est important et un procédé automatique est recherché.

Des algorithmes de vision par ordinateur et d'Intelligence Artificielle ont présenté des avancées récemment. Des modèles pré-entrainés permettent déjà de détecter plus de mille types d'objets courants dans une image, notamment des visages humains par exemple.

Néanmoins, alerter d'un incident par la détection d'une situation anormale est plus complexe à formuler pour un algorithme d'apprentissage automatique, qui précisément nécessite d'être alimenté par un jeu conséquent d'exemples.

Ainsi, la formulation au préalable de maintes situations menaçantes est très complexe à réaliser.

### Résumé

La présente divulgation vient améliorer la situation.

Il est proposé un procédé de traitement de données d'image d'un espace regroupant des spectateurs, le procédé comportant :
- estimer, dans un voisinage courant de spectateurs dans l'image, des orientations de têtes respectives de spectateurs dudit voisinage,
- détecter, au moins en fonction desdites orientations de têtes estimées, si lesdites têtes sont orientées vers une zone de l'espace, pour générer, le cas échéant, un signal comportant des données de ladite zone en tant que zone d'attention de spectateurs dans ledit espace.

Ainsi, selon l'approche proposée, on cherche à « capturer », en temps réel, l'intelligence collective d'un groupe de personnes qui peuvent réagir à tout type de situation anormale. Ainsi, dans cette approche, les spectateurs eux-mêmes comportent l'information pertinente à identifier. Par exemple, si l'attention d'un nombre conséquent de personnes est attirée dans une même zone d'un espace regroupant des spectateurs, alors cette zone présente très probablement une situation remarquable, qui gagne à être analysée plus finement, notamment s'il s'agit d'un incident nécessitant une réaction.

En plus de la fiabilité accrue du fait d'une intelligence collective (ensemble de spectateurs dans un voisinage), cette approche présente aussi l'avantage de concentrer l'effort sur une simple détection de visages humains (ou de « têtes » ci-après) des spectateurs et les orientations de ces têtes.

L'espace précité « regroupant des spectateurs » peut être typiquement une tribune, par exemple de stade, de salle de spectacle, de théâtre, ou autres.

Ainsi, si un nombre conséquent de regards convergent vers la même zone de cet espace alors cette zone présente un intérêt particulier ou par exemple un incident potentiel.

Dans une réalisation, le signal précité peut comporter des données de coordonnées géographiques de la zone d'attention détectée. Typiquement, si l'image est acquise par une caméra mobile, les coordonnées géographiques peuvent être déduites des réglages courants de la caméra mobile.

Dans ce cas, des forces de l'ordre peuvent être alertées par ce signal et aller sur place, avec les coordonnées géographiques, vérifier si un danger est effectivement imminent.

Alternativement, le signal précité peut être transmis à une caméra de surveillance pour effectuer un zoom dans cette zone d'attention (cette caméra étant par exemple reliée à un centre de surveillance, pour intervention rapide par exemple).

Alternativement, un zoom numérique peut être effectué dans la même image acquise par la première caméra, vers la zone d'attention détectée, et l'image zoomée peut être transmise à un centre de surveillance ou encore à une régie pour insertion de cette image zoomée dans un flux de télévision, ou autres.

Dans une réalisation, pour chaque spectateur du voisinage associé à une zone candidate en tant que zone d'attention, il est estimé un écart angulaire entre :
- une droite passant par la tête du spectateur et la zone candidate, et
- une orientation de tête du spectateur.
Cet écart angulaire est alors d'autant plus faible en valeur absolue que la tête du spectateur est orientée vers la zone candidate précitée.

Dans cette réalisation, une moyenne représentative des écarts angulaires peut être estimée sur l'ensemble des spectateurs du voisinage, pour la zone candidate précitée, et la moyenne estimée peut être comparée à un seuil pour déterminer la zone candidate en tant que zone d'attention (i.e. si la zone candidate est une zone d'attention ou non).

Une telle réalisation peut comporter en outre une détermination d'une orientation naturelle des têtes du voisinage vers une zone d'action de jeu se situant devant ledit espace, et la moyenne estimée, précitée, peut alors être pondérée par un écart angulaire entre l'orientation de tête du spectateur et son orientation naturelle vers l'action de jeu.

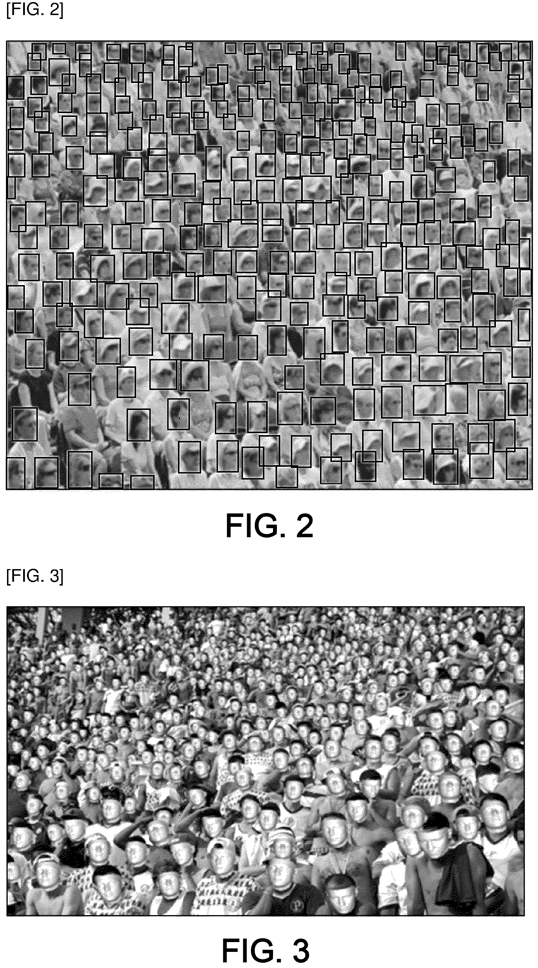

Il est possible de s'aider en outre d'une image plus large que celle du voisinage pour déterminer cette orientation naturelle, comme illustré typiquement par la figure 2 d'une image en champ large, décrite plus loin.

Dans une réalisation où typiquement l'espace regroupant des spectateurs est une tribune de plusieurs rangs et de plusieurs colonnes, le voisinage courant précité peut être constitué de spectateurs situés :
- au même rang qu'une zone candidate en tant que zone d'attention, et à au moins un rang au-dessus et au moins un rang en-dessous dudit même rang, et
- à une même colonne que la zone candidate, et à au moins une colonne à gauche et au moins une colonne à droite de ladite même colonne.

Dans ce cas, il peut être affecté, pour l'estimation de la moyenne, un poids supérieur aux spectateurs du rang en-dessous qu'aux spectateurs du même rang précité, et un poids inférieur aux spectateurs du rang au-dessus qu'aux spectateurs du même rang précité.

Une telle réalisation respecte ainsi le principe de prendre en compte l'orientation naturelle de la tête d'un spectateur vers l'action de jeu. En effet, un spectateur de rang inférieur a une tendance naturelle à regarder l'action de jeu globalement devant lui et a donc sa tête naturellement orientée globalement vers le bas. Si sa tête est détectée au contraire comme étant orientée vers le haut (par exemple vers la tribune de dessus), alors cette situation est inhabituelle et il est accordé plus de poids à une telle détermination dans l'estimation de la moyenne.

De même, on peut affecter plus de poids aux spectateurs qui sont à plusieurs colonnes de la zone candidate que ceux qui ne sont qu'à une seule colonne par exemple de la zone candidate, car, même si des spectateurs sont loin de la zone candidate, cette dernière attire toutefois leur attention.

Dans une réalisation, l'estimation et la détection du procédé sont répétées pour une pluralité de voisinages successifs dans une ou plusieurs images successivement acquises.

Par exemple, le seuil précité peut être déterminé en fonction des moyennes estimées pour ces voisinages successifs.

Typiquement, avant l'estimation des orientations de têtes respectives des spectateurs du voisinage, il peut être mis en œuvre une détection de têtes des spectateurs (en tant qu'objets reconnus par exemple par une intelligence artificielle), et de là, il est possible alors d'estimer l'orientation des têtes ainsi détectées. On comprendra en particulier que cette détection de têtes n'est pas nécessairement une reconnaissance faciale d'un individu spécifique mais simplement une détection d'un objet correspondant à une tête humaine.

Cette détection de têtes des spectateurs peut être suivie typiquement d'une détermination de positions respectives de ces têtes, ce qui permet de déterminer, pour chaque spectateur, la droite précitée passant par la tête du spectateur et la zone candidate en tant que zone d'attention.

Selon un autre aspect, il est proposé un programme informatique comportant des instructions pour la mise en œuvre de tout ou partie d'un procédé tel que défini dans les présentes lorsque ce programme est exécuté par un processeur. Selon un autre aspect, il est proposé un support d'enregistrement non transitoire, lisible par un ordinateur, sur lequel est enregistré un tel programme.

Selon un autre aspect, il est proposé un dispositif de traitement de données d'image d'une tribune comprenant des spectateurs, comportant un circuit de traitement pour la mise en œuvre du procédé ci-avant.

### Brève description des dessins

D'autres caractéristiques, détails et avantages apparaîtront à la lecture de la description détaillée ci-après, et à l'analyse des dessins annexés, sur lesquels :
**Fig. 1**

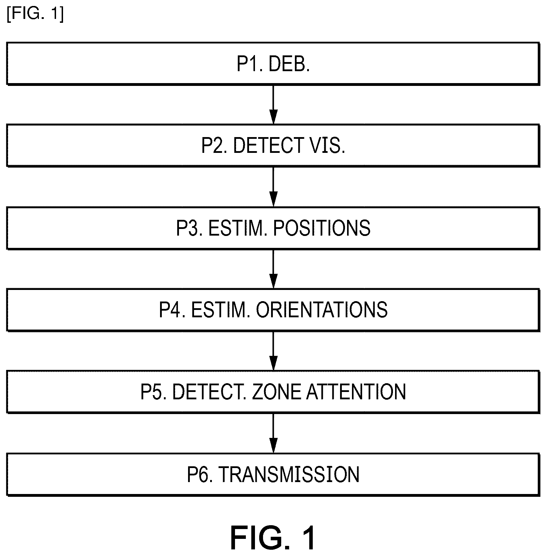

   [Fig. 1] illustre un exemple de succession d'étapes générales, d'un procédé du type présenté ci-avant.
**Fig. 2**
   [Fig. 2] montre une image acquise en champ large d'une tribune de spectateurs, montrant notamment une orientation générale des têtes des spectateurs vers une action de jeu se situant devant la tribune.
**Fig. 3**
   [Fig. 3] illustre une réalisation possible pour détecter des orientations de têtes de spectateurs dans une tribune.
**Fig. 4**

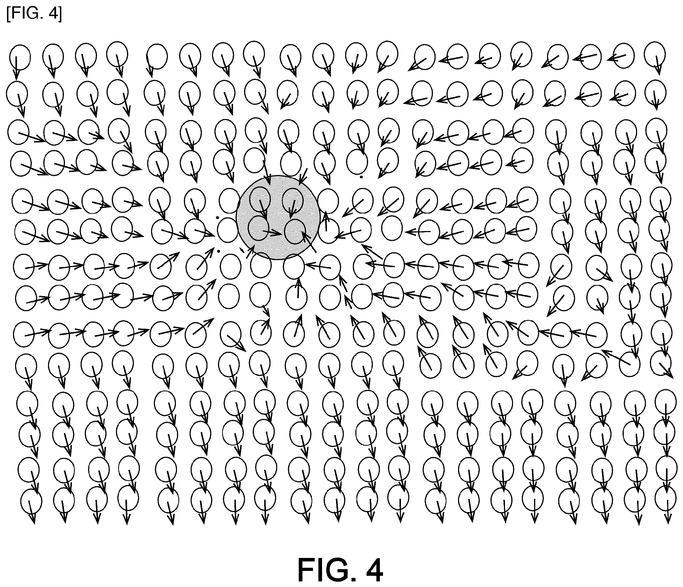

   [Fig. 4] illustre les orientations de têtes d'un voisinage vers une zone d'attention représentée par un disque grisé, tandis que d'autres spectateurs, en dehors de ce voisinage (en bas typiquement de la figure 4), ont leur tête naturellement orientée plutôt vers une action de jeu sur le terrain.
**Fig. 5**

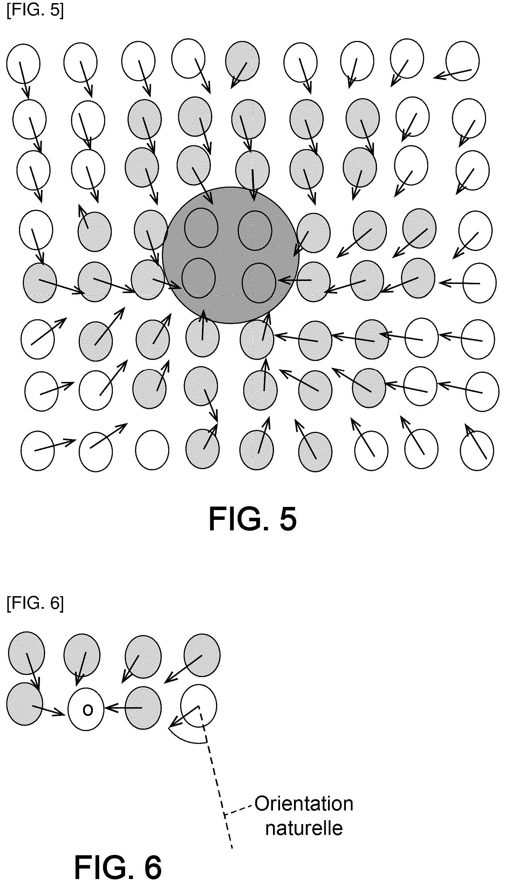

   [Fig. 5] illustre un exemple de voisinage possible à associer à une zone candidate en tant que zone d'attention.
**Fig. 6**
   [Fig. 6] illustre un angle attendu normalement entre une orientation naturelle de la tête d'un spectateur vers l'action de jeu, et une orientation réelle courante de la tête de ce spectateur.
**Fig. 7**

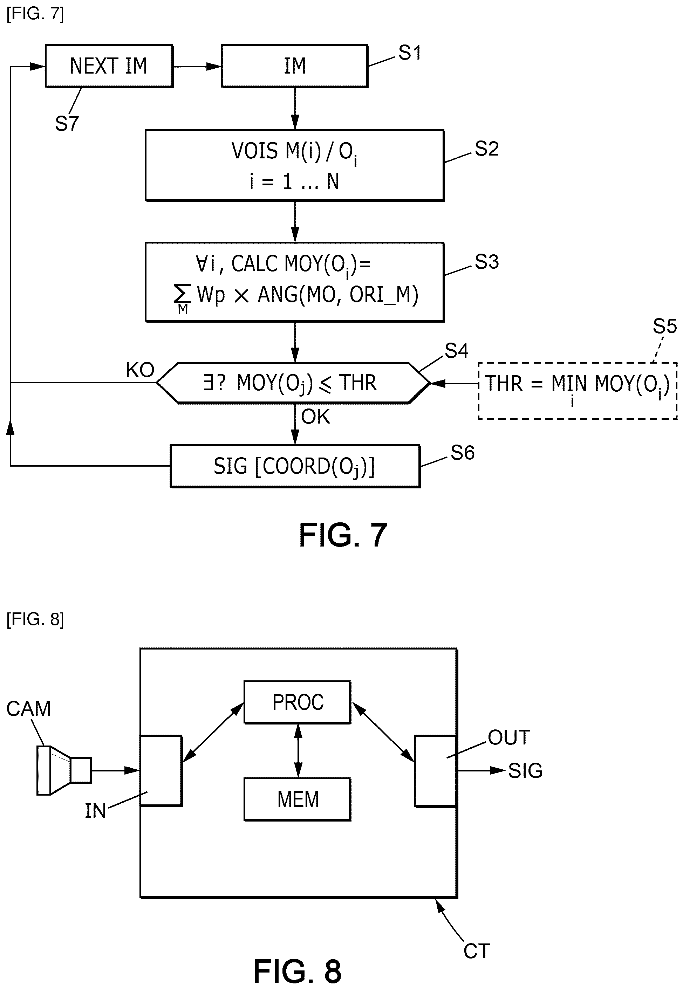

   [Fig. 7] illustre une succession d'étapes plus spécifiques que celles de la figure 1, dans un exemple de réalisation particulier du procédé.
**Fig. 8**
   [Fig. 8] illustre schématiquement une forme de réalisation possible d'un dispositif du type présenté ci-avant.

### Description des modes de réalisation

Il est maintenant fait référence à la figure 1 présentant un exemple d'une succession d'étapes générales d'un procédé selon un mode de réalisation. Ce procédé propose une détermination automatique d'une zone d'attention par des spectateurs d'une tribune, en utilisant un traitement de données d'image informatique pour analyser l'orientation de l'attention des spectateurs eux-mêmes.

Lors d'une première étape P1, le procédé se déclenche par intervention manuelle, ou bien automatiquement via la demande d'un autre système (par exemple de surveillance ou d'un lieu de régie de canaux télévisuels), ou encore de manière régulière (par exemple toutes les cinq minutes), ou autre.

La deuxième étape P2 comprend une détection de têtes, en tant qu'objets simplement identifiés comme étant des têtes (ou des visages). Il ne s'agit donc pas de reconnaissance faciale. Il est attribué des identifiants ID#i à ces têtes pour des calculs ensemblistes décrits plus loin.

A l'étape P3, il est déterminé des positions respectives POS_i de ces têtes pour définir des droites (ou des directions) vers une zone d'intérêt, candidate dans les calculs ensemblistes précités. Les positions peuvent être déterminées dans l'image 2D acquise par une caméra filmant les tribunes par exemple.

Néanmoins, il est possible de déterminer aussi les positions dans un espace 3D à partir d'une détermination de distance entre chaque objet détecté et la caméra, ce qui permet typiquement le passage d'un système de coordonnées cylindriques à un système orthonormé. Cette estimation de distances peut être mise en œuvre par l'implémentation d'une intelligence artificielle, simplement à partir d'une vue frontale. En effet, des approches d'estimation de proximités (relatives) peuvent être robustes à l'aide simplement d'une seule vue monoculaire. Ainsi, à l'aide d'une seule image, une intelligence artificielle de ce type peut proposer un tableau de valeurs correspondant à un résultat d'inférence pour chaque pixel. Une telle approche a l'avantage d'utiliser une caméra standard, à bas coût et il n'est pas nécessaire de prévoir une caméra stéréoscopique, ou munie de capteur tel un Lidar. Il convient d'éviter néanmoins d'utiliser des caméras munies d'optiques induisant de fortes distorsions, telles que des objectifs à grand angle (type « fisheye » par exemple).

Un avantage d'application d'une telle réalisation au contexte de suivi de foule dans un stade consiste en ce que la disposition des personnes principalement assises et faisant face à la zone d'intérêt principale (qui se déroule normalement au centre du stade) rend d'autant plus performante la détection des têtes : il y a en effet peu d'occlusions, comme le montre la figure 2.

Par exemple, le résultat de détection multiples de ces objets peut être une liste d'informations, chacune présentant notamment un rectangle englobant l'occurrence détectée, comme illustré sur la figure 2. Cette donnée de position, en pixels, dans l'image acquise, peut être retranscrite en localisation absolue du fait de la connaissance de la géométrie des tribunes, de l'emplacement de la caméra fixe, ainsi que de l'orientation de l'optique de la caméra si celle-ci est motorisée.

La quatrième étape P4 vise la détermination de l'orientation de l'attention de chaque spectateur dont la tête a été détectée. Cette étape peut être mise en œuvre seulement dans un voisinage restreint comme décrit plus loin, et non pas dans une image globale entière en champ large, notamment pour une économie de calculs.

On entend de façon générale par « orientation de l'attention » une détermination selon diverses modalités possibles : orientation du regard, orientation du visage ou plus généralement orientation de la tête du spectateur.

Pour un public nombreux (situation pour laquelle le traitement proposé est particulièrement utile), il peut être avantageux de mettre en œuvre une « capture » de l'orientation des têtes. Le terme consacré dans la littérature anglo-saxonne est « head pose estimation ». Il existe en effet des modèles d'apprentissage et d'inférence pour la prédiction de l'orientation de la tête à partir d'une seule image. La plupart d'entre eux réalisent une détection de visage et de marqueur faciaux (yeux, nez, bouche) pour instrumenter l'apprentissage. Ces approches sont alors valables pour l'intervalle typiquement [-90°, +90°]. D'autres approches s'affranchissent des marqueurs faciaux pour s'appuyer directement sur une détection de la tête (sans marqueurs faciaux seuls) et proposent alors une estimation dans un intervalle bien plus étendu. Une difficulté apparaît alors, liée à la discontinuité de l'angle de rotation +180° vers -180°. Les modèles d'apprentissages automatiques ont beaucoup de mal à gérer les discontinuités mais des travaux de recherche récents proposent de changer radicalement le mode de représentation. En effet, les angles d'Euler ont l'avantage double de la concision et de la facilité d'interprétation. A l'inverse, une matrice générale de rotation ne présente pas ces avantages mais apporte la qualité de la continuité, utile aux algorithmes d'apprentissage machine (« machine learning »). Sans perte de généralité, on peut utiliser ici des matrices orthonormées : la dernière colonne se déduit des deux premières si bien qu'il y a (seulement) six paramètres à déterminer. Les détections sont alors possibles y compris pour les personnes de dos.

Pour autant, dans un mode particulier de réalisation, la capture de l'orientation d'attention par détection de marqueurs faciaux peut également être une solution simple et adaptée à l'application envisagée ici. La figure 3 illustre une telle détection.

La cinquième étape P5 vise à déterminer s'il se dégage une zone d'attention particulière. Il convient à cet effet de réaliser un traitement ensembliste des informations portées par chaque spectateur (emplacement et axe d'attention).

On cherche à déterminer en particulier si une petite zone de la foule (ou à proximité de la foule) est le centre de multiples attentions issues d'emplacements proches, typiquement dans un voisinage donné. Par exemple, un seuil d'un nombre de cent personnes (ayant toutes la tête orientée vers la zone), parmi les deux cents plus proches voisins de cette zone, doit être atteint pour que la zone précitée soit considérée comme une zone d'intérêt.

Il est décrit ci-après un procédé spécifique, à titre illustratif, pour déterminer qu'une petite zone est le centre d'attention de personnes situées dans les alentours.

Il est considéré a priori que toutes les personnes sont positionnées suivant un quadrillage correspondant à la disposition des sièges d'une tribune.

Il peut être utilisé un traitement spatial pour des matrices 2D, notamment en vision informatique (ou « Computer Vision »), utilisant par exemple un algorithme de convolution et de corrélations croisées (« cross-correlations »).

Il est noté ci-après « I » une matrice 2D, dans laquelle chaque groupe de pixels a pour valeur un angle alpha en radian de l'orientation de l'attention de la personne située dans l'emplacement. Par ailleurs, l'intégralité de la zone à surveiller peut être balayée successivement par de petites zones. Le schéma de la figure 5 illustre l'usage d'un disque de balayage, cela peut aussi être un rectangle si la zone à surveiller se prête à un quadrillage. Dans tous les cas, la forme de balayage gagne à être de taille modérée car il est souhaité de capturer l'attention des personnes situées à proximité de la zone recherchée.

Il est noté ensuite « O » une zone élémentaire de balayage et « V(O) » un voisinage de personnes autour de cette zone élémentaire (par exemple l'ensemble des pixels situés dans un rectangle ou un disque centré en O). Dans le schéma de la figure 5, il s'agit des personnes apparaissant en grisé.

Pour tout point M du voisinage V(O), on définit un coefficient unitaire de cross-correlation c(O,M) = -cos(OM,alpha).

Ainsi, pour toute zone O à balayer, on définit un coefficient ensembliste moyen de voisinage : c(O) = SOM(M dans V(O)) [ - cos(OM, alpha(M) ] / card(V(O).

L'interprétation est la suivante : pour un point O donnée, un tel coefficient avec valeur proche de 1 signifie que presque tous les voisins le regardent.

Certes, un tel traitement, tel quel, est couteux en nombre de calculs, avec notamment des opérations de corrélation d'angle, mais les diverses techniques de quantification et de parallélisation des traitements permettent néanmoins une approche en temps réel.

Une précision très modérée est suffisante et un vrai calcul de cosinus peut être évité en valeurs flottantes de 64 bits. En définitive, une simple table de valeurs avec, par exemple, seulement 100 intervalles est largement suffisante. Enfin, une précision à 10⁻⁶ est aussi suffisante, si bien que l'on peut manipuler simplement des entiers naturels.

Enfin, cette matrice 2D d'entier naturels (ou image) est propice à une architecture de traitement massivement en parallèle grâce aux technologies de « computer vision ».

Dans le cas de gradins, les places sont typiquement orientées vers la scène de jeux. L'attention d'un utilisateur est naturellement orientée dans cette direction. A l'inverse, plus un utilisateur « regarde vers l'arrière », plus cette information a de la valeur pour la question de détection de situation atypique.

Ainsi, on peut pondérer le coefficient unitaire de cross-corrélation par un coefficient d'écart à l'axe nominal pour cet utilisateur. Ceci est illustré sur la figure 6. Avec un intervalle [0,1], en utilisant par exemple : (1-cos(alpha,axe))/2. Là encore, une quantification avec seulement 100 valeurs permet de se limiter à des opérations d'entiers.

L'axe nominal pour un spectateur donné peut être simple à déterminer. Il peut s'agir naturellement de l'axe d'orientation de son siège. Dans une réalisation simple de mise en œuvre, il peut être décidé d'accorder plus de poids aux spectateurs du voisinage qui sont assis à des sièges qui sont sous une zone d'intérêt présumée (spectateurs sous le cercle de la figure 5) qu'à ceux qui sont assis à des sièges situés au-dessus de cette zone, et d'attribuer un poids intermédiaire aux spectateurs assis sur « une même rangée » que la zone d'intérêt.

Néanmoins, la zone d'intérêt peut être en dehors des gradins (par exemple dans l'une des portes d'accès à la tribune). En effet, la zone d'intérêt peut ne pas coïncider forcément exactement à la zone où sont assis les spectateurs et peut aller au-delà (notamment au niveau des portes d'accès par exemple), tout en notant qu'il convient qu'il y ait des spectateurs pas trop éloignés de la zone d'intérêt puisque qu'ils sont précisément les vecteurs de l'information.

Ainsi, alternativement, l'axe nominal peut être déterminé plus généralement par la zone d'attention du spectacle. Cette zone peut évoluer dans le temps : par exemple cela peut être l'emplacement du ballon pour un match de football. Notamment dans le monde du sport, il existe de nombreux procédés d'analyse vidéo qui permettent de déterminer en temps réel la zone d'intérêt de l'activité. Typiquement, une moyenne d'orientations de têtes dans une image en champ large comme illustré sur la figure 2 peut aussi permettre de déterminer un axe nominal d'orientation normale de tête vers l'action de jeu. Aussi, au moment précis du calcul du coefficient de pondération pour un spectateur donné, il est possible de déterminer l'écart d'angle entre l'axe d'attention du spectateur et l'axe nominal de l'action sur le terrain.

A l'étape générale suivante P6 de la figure 1, un signal comportant des coordonnées d'une zone d'attention ainsi détectée peut être transmis à un système tiers, par exemple pour générer une alerte auprès d'un système de surveillance pour la détection d'incidents. Ce signal peut aussi être transmis à une régie (par exemple un camion de régie disposé aux abords du stade) pour générer un flux audiovisuel destiné à être diffusé par une chaine de télévision, à partir de flux acquis par différentes caméras. Dans une telle réalisation, le signal généré à l'étape P6 peut être interprété par un dispositif de régie capable de piloter une caméra pour zoomer vers la zone d'attention, et ainsi filmer une scène qu'un nombre remarquable de spectateurs regardent (par exemple une personne connue du grand public, ou un spectateur qui danse, ou autres).

On a illustré sur la figure 7 une réalisation possible avec une alternative de mise en œuvre de l'étape P5 ci-avant, pour déterminer si une zone candidate O est une zone d'attention (ou tout au moins une zone d'intérêt possible). A l'étape S1, on considère une image courante IM, en champ large par exemple. On y définit à l'étape S2 des voisinages respectifs de zones candidates possibles O. Chaque zone candidate O peut correspondre à un groupe de pixels sur quelques lignes et quelques colonnes de l'image IM et les dimensions de cette zone peuvent correspondre à des dimensions apparentes d'un siège dans l'image IM, par exemple. Ainsi, l'image IM est quadrillée et chaque élément du quadrillage peut avoir la dimension d'un siège et va être considéré, dans ce qui suit, comme zone candidate O en tant que zone d'attention possible.

A l'étape S2, un voisinage VOIS M(i) est attribué à chaque zone candidate O(i). Un voisinage peut s'étendre par exemple à deux rangs (de places assises) au-dessus et en-dessous de la zone candidate O et à trois colonnes (de places assises) à gauche et à droite de la zone O. Le nombre de voisins M d'un voisinage peut être ainsi d'une trentaine de points M (5x7-1).

A l'étape S3, on calcule d'abord, pour une zone candidate O en tant que zone d'attention, chaque angle ANG entre :
- l'orientation ORI_M de la tête d'un voisin M, et
- la droite passant par ce voisin M et la zone candidate O.

Une métrique de mesure d'angle (par exemple son sinus ou sa tangente, ou directement la valeur de l'angle en radians) est utilisée pour calculer la somme de ces angles (en valeurs absolues de ces angles) sur tous les voisins M de la zone candidate O, et, de là, une moyenne angulaire MOY(O) peut être calculée en tant que métrique ensembliste possible sur le voisinage d'une zone candidate O. La moyenne angulaire MOY(O) peut être pondérée en fonction des positions relatives de chaque voisin M par rapport à la zone candidate O. Par exemple, plus de poids peut être affecté aux angles que forment les voisins assis aux gradins inférieurs avec un poids plus fort encore pour la deuxième rangée sous la zone candidate O. De même, le poids Wp peut être croissant en fonction du nombre de colonnes entre la zone candidate O et la place d'un voisin M.

Une fois que la moyenne (ainsi pondérée) a été calculée pour une zone candidate O, on compare cette moyenne à un seuil à l'étape S4 et si cette moyenne est inférieure au seuil THR, alors la zone Oj ayant cette moyenne peut être une zone d'attention recherchée. Le seuil précité peut être paramétrable. Il peut s'agir par exemple de la moyenne la plus petite déterminée pour toutes les zones candidates O successives dans l'image IM en plan large donnée. Ainsi par exemple, à l'étape S5, on calcule successivement les moyennes sur leur voisinage pour chaque zone candidate O et on sélectionne celle qui a la moyenne la plus petite pour commander par exemple un zoom de caméra sur cette zone en tant que zone d'attention possible.

Néanmoins, cette étape S5 est optionnelle (et illustrée par des traits pointillés à cet effet). Alternativement, il est possible encore de déterminer une valeur seuil THR par retours d'expériences précédentes, et indépendamment de la détermination d'une moyenne minimale dans l'image. Ainsi, s'il est identifié une zone candidate dont la moyenne est inférieure à ce seuil THR, alors l'étape S6 est enclenchée (flèche OK en sortie du test S4). Sinon (flèche KO en sortie de S4), le traitement est réitéré sur une autre image IM.

L'étape S6 correspond à l'étape P6 de la figure 1, à savoir la transmission d'un signal comprenant des coordonnées de la zone d'attention (dont la moyenne a été déterminée comme inférieure à un seuil THR).

Les étapes S1 à S5 (et éventuellement S6) peuvent être reproduites ensuite sur une nouvelle image générale acquise à l'étape S7 (NEXT IM), soit avec une autre position de caméra pour surveiller d'autres gradins du stade par exemple, soit avec la même position de caméra et à un instant suivant typiquement.

Tout ou partie de ces étapes peuvent être mises en œuvre par un dispositif tel qu'illustré sur la figure 8, le dispositif comportant un circuit de traitement CT équipé de :
- une interface d'entrée IN pour recevoir des données d'images acquises par une caméra CAM, et éventuellement des données de réglages courants de la caméra (s'il s'agit par exemple d'une caméra mobile),
- une mémoire MEM stockant notamment des données d'instructions d'un programme informatique pour la mise en œuvre ci-avant (et éventuellement par exemple des données des moyennes estimées pour différentes zones candidates en tant que zones d'attention pour la mise en œuvre de l'étape S5 typiquement),
- un processeur PROC capable d'accéder à la mémoire MEM pour lire et exécuter les instructions du programme informatique précité, pour la mise en œuvre du procédé, le processeur recevant en outre les données d'images acquises via l'interface d'entrée IN, sur la base desquelles une ou plusieurs zones d'attention peuvent être détectées comme décrit ci-avant en référence à l'une et/ou l'autre des figures 1 et 7,
- et une interface de sortie OUT capable de délivrer notamment le signal SIG comportant des données de la zone d'attention détectée par la mise en œuvre du procédé, par exemple des données de coordonnées géographiques de cette zone d'attention (déterminées en fonction des réglages de la caméra, par exemple).

Ce signal peut être conformé pour alimenter un système de surveillance et/ou une caméra additionnelle sur le stade capable de zoomer l'image dans une zone d'attention dont les coordonnées ont été transmises et interprétées par la caméra additionnelle.

### Application industrielle

Les présentes solutions techniques peuvent trouver à s'appliquer notamment pour garantir la sécurité des spectateurs, notamment pour les événements qui ont une couverture médiatique mondiale tels les rencontres de coupes de football ou les Jeux Olympiques.

La présente divulgation ne se limite pas aux exemples décrits ci-avant, seulement à titre d'exemple, mais elle englobe toutes les variantes que pourra envisager l'homme de l'art dans le cadre de la protection recherchée.

Les connaissances de géométrie des tribunes et des réglages courants de la caméra d'acquisition peuvent être exploitées pour déterminer l'emplacement absolu de l'objet détecté. Dans un mode particulier de réalisation, une caméra stéréoscopique peut être utilisée pour offrir plus directement les informations d'emplacement.

Au lieu d'utiliser une ou des caméras fixes, le procédé peut s'appliquer également à des caméras mobiles, qu'il s'agisse de drones aériens ou de dispositifs mobiles le long d'un câble. Il convient alors d'équiper le système de capture d'un dispositif de localisation, par exemple GPS ou simplement linéaire le long du câble porteur, ce qui permet de réaliser des calculs de changement de repère pour se ramener à une situation du type décrit ci-avant.

Le procédé peut s'appliquer dans le cas d'un public muni de place assises. Pour autant, il s'agit de suivre des personnes de relativement faible mobilité. De façon plus générale, le procédé peut alors s'appliquer à tout type de public ou foule statique tout au moins le temps d'un calcul d'une zone candidate en tant que zone d'intérêt.

## Revendications

1. Procédé de traitement de données d'image d'un espace regroupant des spectateurs, le procédé comportant :
- estimer (P4), dans un voisinage courant de spectateurs dans l'image, des orientations de têtes respectives de spectateurs dudit voisinage,
- détecter (P5), au moins en fonction desdites orientations de têtes estimées, si lesdites têtes sont orientées vers une zone de l'espace, pour générer (P6), le cas échéant, un signal comportant des données de ladite zone en tant que zone d'attention de spectateurs dans ledit espace.

2. Procédé selon la revendication 1, dans lequel le signal comporte des données de coordonnées géographiques de ladite zone d'attention.

3. Procédé selon la revendication 2, dans lequel l'image est acquise par une caméra mobile et les coordonnées géographiques sont déduites de réglages courants de la caméra mobile.

4. Procédé selon l'une des revendications précédentes, dans lequel le signal est transmis à une caméra de surveillance pour effectuer un zoom dans ladite zone d'attention.

5. Procédé selon l'une des revendications précédentes, dans lequel, pour chaque spectateur du voisinage associé à une zone candidate en tant que zone d'attention, il est estimé un écart angulaire (ANG(MO, ORI_M)) entre :
- une droite (MO) passant par la tête du spectateur et la zone candidate, et
- une orientation de tête du spectateur (ORI_M),
ledit écart angulaire étant d'autant plus faible en valeur absolue que la tête du spectateur est orientée vers ladite zone candidate (O).

6. Procédé selon la revendication 5, dans lequel une moyenne représentative des écarts angulaires est estimée sur l'ensemble des spectateurs du voisinage (S3), pour ladite zone candidate, et
la moyenne estimée est comparée à un seuil (S4) pour déterminer la zone candidate en tant que zone d'attention.

7. Procédé selon la revendication 6, comportant en outre une détermination d'une orientation naturelle des têtes du voisinage vers une zone d'action de jeu se situant devant ledit espace,
la moyenne estimée étant pondérée par un écart angulaire entre l'orientation de tête du spectateur et ladite orientation naturelle.

8. Procédé selon l'une des revendications précédentes, dans lequel ledit espace regroupant des spectateurs est une tribune de plusieurs rangs et de plusieurs colonnes,
et dans lequel le voisinage courant est constitué de spectateurs situés :
- au même rang qu'une zone candidate en tant que zone d'attention, et à au moins un rang au-dessus et au moins un rang en-dessous dudit même rang, et
- à une même colonne que la zone candidate, et à au moins une colonne à gauche et au moins une colonne à droite de ladite même colonne.

9. Procédé selon la revendication 8 prise en combinaison avec l'une des revendications 6 et 7, dans lequel il est affecté, pour l'estimation de la moyenne, un poids supérieur aux spectateurs du rang en-dessous qu'aux spectateurs dudit même rang, et un poids inférieur aux spectateurs du rang au-dessus qu'aux spectateurs dudit même rang.

10. Procédé selon l'une des revendications précédentes, dans lequel l'estimation et la détection sont répétées pour une pluralité de voisinages successifs dans une ou plusieurs images successivement acquises (S7).

11. Procédé selon la revendication 10, prise en combinaison avec l'une des revendications 6 à 9, dans lequel ledit seuil est déterminé (S5) en fonction des moyennes estimées pour lesdits voisinages successifs.

12. Procédé selon l'une des revendications précédentes, dans lequel l'estimation des orientations de têtes respectives des spectateurs du voisinage est précédée par une détection de têtes des spectateurs (P2).

13. Procédé selon la revendication 12, dans lequel la détection de têtes des spectateurs est suivie d'une détermination de positions respectives desdites têtes (P3), pour déterminer, pour chaque spectateur, une droite (MO) passant par la tête du spectateur et une zone candidate (O) en tant que zone d'attention.

14. Programme informatique comportant des instructions pour la mise en œuvre du procédé selon l'une des revendications précédentes, lorsque ce programme est exécuté par un processeur.

15. Dispositif de traitement de données d'image d'un espace regroupant des spectateurs, comportant un circuit de traitement (PROC, MEM, IN, OUT) pour la mise en œuvre du procédé selon l'une des revendications 1 à 13.
